# EUROPEAN PATENT APPLICATION

(11) **EP 4 661 317 A1**
(43) Date of publication of application: **10.12.2025**
(21) Application number: 24180586.0
(22) Date of filing: 06.06.2024
(51) Int. Cl.: H04B 10/112, G02B 6/293, H04B 10/70

(54) **A SYSTEM AND METHOD FOR FILTERING A RECEIVED SIGNAL WITH TIME-VARIANT AMPLITUDE AND WAVELENGTH AND NOISE CHARACTERISTICS**

(71) Applicant: Nederlandse Organisatie voor toegepast-natuurwetenschappelijk Onderzoek TNO, 2595 DA 's-Gravenhage (NL)
(72) Inventor: KOEK, Wouter Dick, 2595 DA 's-Gravenhage (NL); DOELEMAN, Nicolaas Jan, 2595 DA 's-Gravenhage (NL); HAGEN, Ronald Antonius Jan, 2595 DA 's-Gravenhage (NL)
(74) Representative: V.O.

(57) **Abstract**

A system and method for filtering a received signal with time-variant amplitude and wavelength and noise characteristics. An adaptable narrow-band optical filter is provided that is configured to have an adjustable center wavelength and an adjustable bandwidth in order to compensate for time-variant signal and noise. An adjustment unit is coupled to the optical filter for performing adjustments to the filter in order to modify its filtering properties as required by time-variant characteristics of the signal and noise.

## Description

### FIELD OF THE INVENTION

The invention relates to a system configured to filter a received signal with time-variant amplitude and wavelength and noise characteristics. The invention also relates to a method for filtering a received signal with time-variant amplitude and wavelength and noise. Also, the invention relates to a method for improving signal-to-noise ratio in a Quantum Key Distribution, QKD, system through adaptive compensation for environmental conditions. Furthermore, the invention also relates to a use of the system for adjusting filter characteristics in order to compensate for changes in the environmental conditions in a free-space Quantum Key Distribution.

### BACKGROUND TO THE INVENTION

In the field of optical communications, for example in the field of quantum communications such as quantum key distribution (QKD), the effective filtering of signals is of great importance. The existing state of the art encompasses various methods and systems configured to filter optical signals to enhance signal integrity and/or communication security. However, these conventional systems have limitations.

For example, traditional optical filters, including those used in high-precision applications, typically operate with a fixed bandwidth. These fixed-bandwidth filters are limited in their ability to adapt to the dynamic nature of optical signals, especially in environments with fluctuating noise and signal characteristics. The inability of these filters to adjust their bandwidth in response to changing conditions often results in suboptimal performance, particularly in terms of signal-to-noise ratio. This limitation becomes especially critical in the context of QKD, where photon fluxes are low and information transfer can occur at the single-photon level. The need to effectively manage signal and noise levels becomes an important factor in maintaining acceptable secret key rates and minimizing bit-error levels.

A notable challenge arises in the scenario where a satellite emits signals at the single-photon level. Ground stations are tasked with filtering out background photons, which are related to sky conditions. These stations employ temporal, spatial, and spectral filtering methods. A key aspect of this process is dealing with the center wavelength of the satellite signal, which is known a priori but subject to change due to the Doppler shift as the satellite's elevation angle varies. This adds an additional layer of complexity to the filtering process.

The problem is compounded by the variability and unpredictability of signal and noise levels, which are influenced by time and environmental conditions. Traditional narrowband filters, with their fixed bandwidths, are ill-equipped to adapt to these changing conditions. They are unable to reject background light effectively, leading to compromised performance in QKD systems.

Another significant challenge lies in the unknowns concerning target systems for these filters. The optimum filter bandwidth is highly dependent on the specific use-cases and scenarios, which may not be fully known or may evolve over time.

For a given ground station, the optimum filter width can be pre-selected based on the properties of the upcoming satellite overpass (e.g., source rate, altitude, transmit aperture, atmospheric conditions). The atmospheric conditions for example may be time-variant and therefore require the filter to be adjusted to maintain optimal conditions.

The applications of these filtering systems extend beyond QKD. They are relevant in various other fields, such as quantum entanglement and alignment purposes (for a specific wavelength and polarization). This broad range of applications underscores the need for a more adaptable and versatile filtering solution, capable of addressing the challenges posed by fixed bandwidth filters in the dynamic and varied contexts of quantum communication technologies.

### SUMMARY OF THE INVENTION

It is an object of the invention to provide for a method and a system that obviates at least one of the above mentioned drawbacks.

Additionally or alternatively, it is an object of the invention to provide for a system that can better filter a received signal with time-variant amplitude and wavelength and time-variant noise characteristics.

Additionally or alternatively, it is an object of the invention to improve the overall efficiency of signal processing in communication systems, such as quantum communication systems.

Additionally or alternatively, it is an object of the invention to enhance the adaptability and responsiveness of spectral filters to varying environmental conditions and signal characteristics.

Additionally or alternatively, it is an object of the invention to facilitate more accurate and dynamic control over the filtering in quantum key distribution applications.

Thereto, the invention provides for a system configured to filter a received signal with time-variant amplitude and wavelength and noise characteristics, wherein the system includes an adaptable narrow-band optical filter that is configured to have an adjustable center wavelength and an adjustable bandwidth in order to compensate for time-variant changing signal and noise, and wherein the system includes an adjustment unit coupled to the optical filter for performing adjustments to the filter in order to modify its filtering properties as required by time-variant characteristics of the signal and noise.

The system can effectively compensate for time-variant changes in signal and noise characteristics. The system includes an adjustment unit that is intricately coupled to the optical filter, enabling it to modify the filter's properties in response to the dynamic nature of the signal and noise. The dynamic adaptability allows for real-time optimization of filtering performance to match varying signal conditions. This is achieved through the adjustable nature of the filter, which allows for accurate and responsive tuning to ensure optimal signal clarity and noise reduction.

The signals being filtered may have time-variant amplitude and wavelength and time-variant noise properties. The adjustment unit is configured to execute modifications to the filtering properties of the optical filter, aligning them with the dynamic characteristics of the signal and noise. This system, by virtue of its adjustable components, is adept at maintaining optimal filtering performance in the face of fluctuating signal and noise conditions, thereby ensuring consistent signal integrity.

In some examples, the system can be used to effectively compensate for the time-variant changing signal and noise characteristics inherent in optical communication, particularly in quantum key distribution (QKD). The adjustment unit, operatively coupled to the optical filter, facilitates real-time modifications of the filter's properties in response to the dynamic signal and noise conditions. The adaptability is achieved through the accurate and responsive adjustment mechanisms within the system.

The system can be used to effectively optimize the rejection of background noise for example in satellite-to-ground quantum communication links. A customizable and real-time adjustable narrow-band optical filtering system may be provided that is specifically tailored for diverse communication scenarios including quantum communication.

It will be appreciated that the received signal may be a signal that includes an information signal and noise. The information signal may be understood as representing meaningful information that the system aims to retrieve, having varying amplitude and wavelength due to factors such as motion of the transmitter and/or receiver, drift, atmospheric conditions in a broad sense, etc. The noise represents unwanted modifications to the information signal.

The received signal may be subject to time-variant amplitude and wavelength and noise characteristics. The received signal can be influenced and altered by 'noise', e.g. unwanted interference or alterations that obscure or distort the original information, making its retrieval and analysis challenging. The process of receiving or measuring involves dealing with the combination of both the signal and the noise, leading to what may be termed as a 'distorted signal', 'received signal', or 'unfiltered signal'. The system and method of the disclosure provides the ability to dynamically adjust its optical filtering capabilities, via an adaptable narrow-band optical filter with an adjustable center wavelength and bandwidth, in response to the changing characteristics of both signal and noise. This adaptability ensures the most accurate separation and retrieval of the valuable signal from the pervasive noise, thus significantly enhancing the clarity and integrity of the information received.

It will be appreciated that the system can be configured to adjust its properties as a result of time-variant signal properties (cf. level or amplitude, center wavelength) and noise properties (level, or amplitude). The optical filter may be configured to adjust its center wavelength and bandwidth in response to changes in signal amplitude, signal center wavelength, and noise amplitude over time. This adaptability ensures the filter remains effective despite the variability of signal and noise characteristics.

Optionally, the filter comprises a plurality of optical fiber gratings associated with different bandwidths.

A plurality of optical fiber gratings can be integrated within the filter, each associated with different bandwidths. The multiplicity of gratings expands the system's versatility, offering a range of bandwidth options for filtering. This provides for an enhanced selectivity in filtering different noise profiles, as each grating can be tailored to a specific bandwidth. This is achieved by incorporating multiple gratings, thereby allowing the system to selectively target and filter out a broader spectrum of noise frequencies, leading to a more effective noise reduction and improved signal clarity.

In the context of an optical filter system, the incorporation of multiple optical fiber gratings is advantageous, since it significantly enhances the system's noise filtering capabilities. Each grating in the system is configured to target a specific bandwidth, which is a defined range of frequencies within the broader electromagnetic spectrum. By having a plurality of these gratings, each fine-tuned to a different bandwidth, the system gains the ability to selectively filter out noise across a much wider range of frequencies compared to a single grating setup.

With multiple gratings, the system can selectively engage the appropriate grating (or combination of gratings) that correspond to the bandwidth of the prevailing noise. This selectivity allows for a more accurate and effective filtering process. For instance, if the noise profile changes, the system can switch to or combine different gratings to best counteract this new noise profile.

The variety of gratings, each with its distinct bandwidth, collectively covers a broader spectrum of frequencies. This broad coverage can be important in dynamic environments where noise characteristics can vary significantly over time. The system is thus equipped to handle a wide range of time-variant noise levels/ amplitudes.

Incorporating a variety of optical fiber gratings, each configured for a specific bandwidth, the system offers dynamic settings where the amplitude of noise, rather than its frequency, exhibits significant fluctuations over time. The system is adept at adapting to these variations by adjusting the bandwidth of the filter rather than its central frequency, effectively addressing changes in noise amplitude. This capability ensures optimal performance even as environmental conditions shift, by modulating the filter's bandwidth to maintain signal integrity amidst varying noise levels. Such adaptability is particularly valuable next to scenarios where the signal frequency itself may alter due to phenomena like the Doppler effect, underscoring the system's ability to maintain clarity and reduce noise through precise bandwidth adjustments, rather than frequency shifts.

The ability to filter out noise more effectively directly contributes to improved signal clarity. A precision in filtering enhances the discernibility of the desired signal, particularly in critical applications like quantum key distribution (QKD). Here, the elevation in SNR is not merely about clearer transmission; it directly translates to enhanced system performance, characterized by a higher rate of secret key generation and a reduced Quantum Bit Error Rate. The improved approach to filtering according to the disclosure underscores the importance of adaptability and precision in maintaining signal integrity amidst varying noise levels.

The system's design allows for dynamic adaptability. As environmental conditions or signal characteristics change, the system can adjust by engaging different gratings or altering the configuration of the gratings in use. This adaptability ensures consistent performance despite varying external conditions.

Optionally, the filter comprises an actuator unit for adjusting the center wavelength of the optical fiber gratings.

The actuator unit enables accurate control over the filter's central wavelength. The accurate control over the central wavelength is key in ensuring that the filter remains aligned with the desired signal wavelength, thereby maximizing signal capture and minimizing noise interference.

The actuator unit allows for fine adjustments to the filter's wavelength response. This means that the filter can be tuned to very specific wavelengths, which can be important in applications where the signal's wavelength may vary slightly due to various external factors.

With the ability to fine-tune the central wavelength, the filter can be more effectively tailored to filter out unwanted noise while retaining the desired signal. This targeted approach is particularly beneficial in environments with complex and varying noise profiles, where generic filtering solutions may not be sufficient.

Optical communication systems often encounter variations in signal wavelength due to various operational conditions. The actuator unit's precision allows the filter to adapt quickly to these changes, ensuring that the filter's performance remains optimal or near-optimal under different signal conditions.

In some examples, the actuator unit configured to manipulate the physical properties of the optical fiber gratings, such as strain or temperature, which directly affect the gratings' refractive index and, consequently, the central wavelength.

The design of the actuator unit incorporates mechanisms for making very fine adjustments. This can involve high-resolution control systems, for example driven by piezoelectric materials or other accurate actuation methods, enabling minute changes in the grating structure.

In order to ensure the accuracy of wavelength adjustments, the actuator unit may be coupled with feedback systems that monitor the filter's performance in real-time. These systems can detect any deviation from the desired wavelength and prompt the actuator unit to make necessary corrections.

Optionally, the filter is a fiber-based spectral filter with switchable bandwidth.

In this way, dynamic switching between different bandwidths is enabled, adapting to varying noise and signal conditions. The switchable bandwidth aspect enables the filter to adapt quickly and efficiently to changing signal environments, ensuring that the filtering is always optimal for the current conditions.

The ability to switch bandwidths rapidly ensures that the filter can adapt quickly to sudden changes in the signal environment. This is especially important in scenarios where signal characteristics can change rapidly, such as in certain types of optical communications or atmospheric monitoring. By enabling swift transitions between different bandwidth settings, the system ensures minimal disruption to signal processing and maintains continuous operation at optimal efficiency.

An optical switch mechanism can rapidly shift the operational focus from one grating to another, effectively changing the bandwidth of the filter almost instantaneously. The switchable bandwidth feature ensures that the filter always operates within the most appropriate range for the current signal conditions. When the bandwidth is optimally aligned with the signal's spectral characteristics, the filter maximizes signal capture while effectively rejecting out-of-band noise. This results in enhanced signal integrity, characterized by a higher signal-to-noise ratio, which can be important in applications like quantum key distribution or precise optical sensing.

Optionally, the actuator unit is configured to mechanically strain the optical fiber gratings, thereby adjusting the central wavelength of the filter.

The mechanical straining enables precise and controlled manipulation of the filter's wavelength characteristics. By mechanically straining the gratings, the system can fine-tune the wavelength at which the filter operates, ensuring it aligns perfectly with the desired signal wavelength. This method of adjustment is highly effective in maintaining the filter's accuracy and responsiveness to signal changes, thereby enhancing signal reception and reducing noise interference.

The physical alteration affect the refractive index and the grating period - the two key factors that determine the central wavelength at which the filter operates.

The mechanical strain can alter the spacing between the grating lines in the fiber, effectively tuning the wavelength of the light that is most efficiently reflected or transmitted by the grating. This approach allows for very fine adjustments. The ability to precisely control the degree of strain applied means that the central wavelength can be tuned with a high degree of accuracy.

The method of wavelength adjustment is particularly effective in maintaining the filter's accuracy and responsiveness to changes in the signal. This effectiveness is rooted in the configuration of the filter system, which includes not just the optical filter itself but also an integrated actuator, control unit, and sensor array. The system can be configured to dynamically respond to fluctuations and changes in the environment or signal characteristics. The actuator adjusts the filter in real-time based on feedback from the sensors, while the control unit orchestrates this process to ensure the filter maintains its high level of accuracy and responsiveness. Together, these components create an adaptive system capable of fine-tuning its properties to match the evolving conditions of the signal.

In real-world applications, especially in fields like quantum key distribution or telecommunications, the characteristics of the signal can vary due to a multitude of factors such as motion of transmitter and or receiver, drift, atmospheric conditions in a broad sense, environmental changes, etc.. The system's ability to quickly and accurately adjust the filter's central wavelength in response to these changes ensures that the filter remains optimally aligned with the desired signal wavelength at all times.

By aligning the filter's central wavelength with the signal wavelength, the system maximizes signal reception. This alignment can be important in filtering applications because it ensures that the desired signal is transmitted through the filter with minimal losses while unwanted wavelengths (noise) are effectively blocked or attenuated. This selective transmission and attenuation lead to a significant reduction in noise interference, thereby enhancing the overall signal-to-noise ratio.

Optionally, the plurality of optical fiber gratings are configured to be collectively adjusted in central wavelength by means of the actuator unit.

This enables unified and synchronized adjustment of multiple gratings, which ensures a cohesive and harmonized response to changes in signal characteristics. This collective adjustment mechanism ensures that all gratings are precisely aligned in terms of central wavelength, thereby enhancing the overall filtering efficiency and ensuring a consistent and effective response across the entire filter spectrum.

The collective adjustment capability enables synchronized tuning of multiple gratings. In an optical filtering context, especially where precision is important, such as in quantum key distribution (QKD), the alignment of the central wavelength across all gratings can be desired. This alignment ensures that each grating responds coherently to the signal characteristics, thereby maximizing the filter's overall efficiency. Optical signals may contain components spread across a spectrum of wavelengths. By ensuring that all gratings are precisely aligned, the system can effectively handle a wide range of signal wavelengths without compromise.

The actuator unit can be configured to exert accurate control over multiple fiber Bragg gratings (FBGs). In some examples, piezoelectric stages or other finely controllable mechanical systems, are used to impart strain or other physical modifications to the gratings. Rather than aligning their central wavelengths, which may be challenging and unnecessary when multiple FBGs are controlled by a single actuator unit, the focus may be on mounting the FBGs to ensure each spans its intended tuning range. Furthermore, the relationship between an actuator's setting and the resultant wavelength shift in one FBG can be configured to be a reliable indicator of the wavelength shift in another FBG.

When the signal characteristics change - for example, if the central wavelength of the signal drifts due to temperature variations or other environmental factors - the actuator can simultaneously adjust all gratings to this new central wavelength. This synchronization is not just about keeping pace with the signal changes; it also ensures that the different bandwidths provided by each grating remain effectively aligned with the signal.

In quantum communications, for instance, maintaining high fidelity of the signal can be important for the integrity of the transmitted information. The collective adjustment of the gratings means that the system can adapt to environmental changes or signal drift without losing efficiency or increasing error rates. Moreover, this feature simplifies the system's design and operation. Instead of individually tuning each grating to match the signal - a process that would be time-consuming and prone to misalignment - the system can adjust all gratings in one concerted motion. This not only enhances the system's responsiveness but also reduces the complexity of the control mechanisms required, leading to improved reliability and lower costs in both manufacturing and operation.

Optionally, the plurality of optical fiber gratings are arranged in parallel, each corresponding to a different bandwidth.

The parallel configuration offers a substantial advantage in terms of filter versatility and response speed. By having gratings in parallel, each tuned to a specific bandwidth, the system can rapidly switch between gratings to adapt to varying noise profiles. This design allows for quick and efficient adaptation to changing signal conditions, ensuring that the filter always operates at the optimal bandwidth for the current environment.

Different signal conditions, especially in dynamic environments like quantum key distribution (QKD) or deep space communication, demand flexibility in the filter's operational bandwidth. By having a range of gratings, each configured for a specific bandwidth, the system can work with a broad spectrum of signal characteristics.

The parallel configuration also provides for a rapid response speed to the system, which is an important advantage in real-time signal processing applications. In environments where signal characteristics can change rapidly - due to atmospheric fluctuations, varying noise levels, or the inherent unpredictability in quantum-level communications - the ability to quickly adapt the filtering parameters can be important.

For example, if a sudden increase in background noise is detected, the system can quickly switch to a grating with a narrower bandwidth, thus enhancing the signal-to-noise ratio. Conversely, if the signal becomes stronger or the noise level drops, the system can opt for a grating with a wider bandwidth to maximize signal throughput.

Optionally, the actuator unit is a piezoelectric stage for applying strain to the optical fiber gratings in order to set the center wavelength of the optical fiber gratings.

The piezoelectric stage presents a significant advantage due to its precision and responsiveness in setting the center wavelength of the gratings. The piezoelectric mechanism allows for fine, controlled adjustments with a high degree of accuracy and repeatability. This precision can be important for maintaining the filter's alignment with the signal wavelength, ensuring maximum signal capture and noise rejection.

The piezoelectric stage enables very fine adjustments to the strain applied to the optical fiber gratings. This precision is important in setting the center wavelength of the gratings with a high degree of accuracy. The mechanism ensures that the filter can be accurately tuned to the specific wavelength required for optimal signal processing. This fine tuning can be important because even minor deviations in wavelength can significantly affect the performance of the filter in applications like quantum key distribution (QKD) or other sensitive optical communication systems.

Optionally, the system further comprises an optical switch for switching between the plurality of optical fiber gratings in order to select the bandwidth of the filter.

The arrangement of the optical switch enables to rapidly select the appropriate bandwidth for the filter. This switching capability allows the system to respond swiftly to changes in signal and noise conditions, ensuring that the filter is always operating with the most suitable bandwidth. The optical switch facilitates quick transitions between gratings, maintaining the filter's effectiveness and adaptability in dynamic signal environments.

The optical switch allows for quick selection of the appropriate bandwidth for the filter. In practical terms, this means that the filter can be tuned rapidly to the optimal bandwidth as the signal conditions change. This rapid selection can be important in scenarios where delays in response can lead to significant degradation of the signal quality or increased error rates.

In dynamic signal environments, where the nature of noise and signal can change rapidly (for example, due to atmospheric conditions, transitions between day and night, or varying levels of electromagnetic interference), the filter's adaptability is important for maintaining high-quality signal processing.

In high-speed communication systems, latency is an important factor. The optical switch's rapid selection capability significantly reduces the time taken to adjust the filter settings in response to changing conditions, thereby minimizing the latency in the system's overall response. This is particularly advantageous in applications where real-time data transmission and processing are important.

Optionally, the system further comprises a calibration mechanism configured to use a secondary, currently inactive optical fiber grating for referencing a currently active optical fiber grating to characterize and correct deviations due to drift, wherein the secondary optical fiber grating shares a thermal housing with the active optical fiber grating, and wherein the calibration mechanism further includes a feedback mechanism configured to adjust the active optical fiber grating based on the drift characteristics observed in the inactive optical fiber grating.

In this way, the system is provided with the ability to continuously self-calibrate and correct for any drift, ensuring consistent and accurate filter performance over time. This is achieved by using the inactive grating as a reference point, allowing for real-time adjustments and corrections to the active grating based on observed drift characteristics. This feature can be important for maintaining long-term stability and accuracy of the filter.

This enables continuous self-calibration of the filter system. Over time, various factors such as temperature changes, mechanical stresses, or aging of materials can cause the optical properties of the fiber gratings to drift from their initial calibrated state. Such drifts can lead to suboptimal filter performance, affecting the system's ability to accurately filter out noise and maintain the desired signal quality. The inclusion of a secondary, inactive grating as a reference point allows the system to detect these deviations in real time and correct for them without manual intervention.

The inactive optical fiber grating serves as a stable reference point. This facilitates the system's ability to perform continuous self-calibration and adjustment, addressing the inevitability of optical property shifts in the fiber gratings due to environmental factors like temperature fluctuations, mechanical strains, or material aging. These shifts may compromise the filter's efficacy, thereby diminishing its noise filtering capacity and signal integrity preservation. To counteract this, the system employs a secondary, inactive optical fiber grating housed within the same thermal environment as the active grating. This setup does not rely on monitoring the active grating's performance, which could interfere with signal processing. Instead, it assumes that both gratings undergo similar drifts due to their shared environmental conditions. Corrections are made based on the assumption that drifts observed in the inactive grating mirror potential drifts in the active one, thus enabling real-time, non-intrusive adjustments to maintain optimal filter performance without manual recalibration efforts.

By consistently referencing the inactive grating and making necessary adjustments to the active one, the system ensures that the filter's performance remains stable and accurate over time. This ongoing calibration process can be important for applications where accurate filtering can be important and where environmental or operational conditions may vary.

Optionally, the calibration mechanism utilizes a narrowband source and measures transmission through the inactive optical fiber grating to detect deviations from a last calibration state of the active optical fiber grating.

The use of a narrowband source ensures accurate and sensitive detection of any drift, allowing for prompt and accurate recalibration of the active grating. This proactive approach to calibration ensures that the filter remains optimally tuned at all times, enhancing its reliability and effectiveness in filtering.

Narrowband sources emit light at very specific and well-defined wavelengths. When such a source is used for calibration, it can detect even minor deviations in the transmission characteristics of the optical fiber grating. This accurate detection can be important for identifying and correcting any drift in the filter's performance, which may otherwise go unnoticed. The narrowband source's precision allows for sensitive detection of changes, enabling prompt recalibration of the active optical fiber grating. This sensitivity is particularly beneficial in real-time applications where conditions can change rapidly. By quickly identifying and responding to these changes, the system can recalibrate the active grating with minimal delay, thereby ensuring that the filter's performance remains consistent with its calibrated state.

The calibration mechanism can embody a proactive approach. Instead of reacting to performance issues after they have impacted the system's effectiveness, the mechanism anticipates potential deviations by continuously monitoring the inactive grating. This ongoing monitoring allows for immediate adjustments and recalibrations, ensuring that the filter's settings are always optimal for current operating conditions.

By maintaining the filter in its optimally tuned state, the system's reliability and effectiveness in filtering are significantly enhanced.

Alternatively also a broadband source can be input to the inactive fiber and the filtered spectrum can be measured by for instance a spectrometer.

Optionally, the optical switch is configured to latch to two outputs simultaneously, enabling concurrent connection to both an active and an inactive optical fiber grating for real-time calibration and/or correction purposes.

In this way, the system's accuracy and reliability can be improved. By maintaining a continuous connection to both an active and an inactive grating, the system can perform ongoing calibration, ensuring that the active grating's performance remains optimal even as environmental conditions change. This concurrent connection allows for continuous monitoring and immediate adjustments, based on the observed drift characteristics in the inactive grating. As a result, this design ensures a consistently high level of precision in the filter's performance, important for applications requiring exacting wavelength filtration, such as quantum key distribution (QKD). The ability to perform real-time calibration and correction directly contributes to the system's robustness and effectiveness in dynamic operational environments.

The optical switch's ability to connect simultaneously to an active and an inactive optical fiber grating facilitates an on-going or repeated calibration process. This connection may be not just sequential but parallel. In some examples, the inactive filter is monitored, and the a priori determined correlations/corrections are then applied.

The ongoing calibration can be important for maintaining the precision of the active grating. As environmental conditions fluctuate, the system can instantly compare the active grating's performance against the stable baseline provided by the inactive grating. This comparison can be important for detecting and correcting any deviations in real time.

The system may be configured to continuously monitors the inactive grating for any drift characteristics. Drift in this context may refer to the unintended changes in the grating's properties due to factors like temperature fluctuations, mechanical stress, aging, etc. Based on these observations, the system can make immediate adjustments to the active grating. This ability to adapt swiftly to changes ensures that the filter's performance remains consistent, even under varying operational conditions.

The real-time calibration and correction mechanism ensures that the system remains effective and reliable in real-world scenarios, where static calibration methods may fall short.

Optionally, a calibration module including an wavelength tracking unit is arranged for tracking the wavelength of a tunable optical source.

In this way, the operational precision and adaptability can be improved. By integrating a wavelength tracking unit within the calibration module, the system can actively monitor and track the output wavelength of the tunable optical source. This capability ensures that the system remains calibrated and accurate over a range of operational conditions and wavelengths. This provides for the ability to maintain consistent performance, particularly in applications where the accurate control of wavelength can be important. This tracking unit aids in ensuring that the optical filter consistently operates at the intended wavelength, thereby maximizing the efficacy and reliability of the filter's performance in dynamically changing environments.

The integration of the wavelength tracking unit within the calibration module provides a significant advantage by offering the ability to actively monitor and regulate the wavelength of the tunable optical source. This feature is important for applications requiring stringent control of the wavelength, such as in high-precision optical communications or advanced quantum computing interfaces.

The wavelength tracking unit allows the system to adapt in real-time to changing operational conditions. This real-time adaptability can be important in maintaining the integrity of the system's performance, especially in applications where the environmental conditions or signal characteristics can change rapidly and unpredictably.

Optionally, the calibration module includes a gas reference cell with known absorption lines to establish an absolute wavelength scale for the tunable optical source by comparing the detected light through the gas cell with output from the wavelength tracking unit.

The inclusion of the gas reference cell provides a significant advantage by offering a stable and accurate wavelength reference against which the system can calibrate. The known absorption lines of the gas within the cell act as a benchmark, enabling the system to compare the detected light through the cell with the output from the wavelength tracking unit. This comparison ensures high accuracy in establishing the absolute wavelength scale. The effect of this configuration is the system's enhanced ability to maintain calibration accuracy over time, even under varying environmental conditions. This accurate and reliable calibration mechanism can be important in applications where even minor deviations in wavelength can significantly impact system performance, ensuring the system's efficacy in a wide range of operational scenarios.

The gas reference cell may contain gas with absorption lines that are invariant and well-characterized. These lines provide a consistent and reliable reference against which the system's wavelength can be calibrated. This stability can be important in environments where external factors may otherwise lead to drifts in wavelength accuracy.

The absorption lines in the gas may act as accurate markers. When the system directs light through the gas cell, these markers enable the calibration module to compare the light's actual wavelength against the expected absorption lines. This comparison allows for accurate calibration, correcting even minor deviations that can affect system performance.

The ability of the gas reference cell to provide a consistent reference point is especially beneficial for long-term system stability. Over time, components in optical systems can drift, leading to slight changes in performance. The gas cell helps in periodically recalibrating the system to account for such drifts, maintaining high accuracy.

Optionally, the calibration module is configured to sweep the tunable optical source over a relevant wavelength range and measure the transmission through each optical fiber grating while monitoring the output from the wavelength tracking unit, thereby establishing an absolute transmission peak for each actuator setting.

In this way, a comprehensive calibration capability can be effectively provided. By sweeping across the relevant wavelength range and measuring transmission through each grating, the system can establish an absolute transmission peak for each actuator setting. This process ensures that each grating is accurately calibrated for its specific operational range. This sweeping mechanism allows for a thorough and detailed calibration process, which can be important for applications requiring high fidelity in wavelength filtering and precision, such as advanced optical communication systems.

The calibration module can be equipped with the capability to sweep the tunable optical source across a relevant wavelength range. This sweeping mechanism allows the system to cover a broad spectrum, ensuring that every part of the operational range is accounted for during calibration. This provides the ability to conduct a comprehensive assessment of its performance across the entire wavelength range it is configured to operate within.

As the sweep occurs, the system can measure the transmission through each optical fiber grating. This process involves assessing how each grating handles light across the swept wavelength range. By doing so, the system can identify the absolute transmission peak for each grating at different actuator settings. This feature ensures that each grating is not only functional but also optimized for its specific role within the system.

While the sweeping and measurement process takes place, the output from the wavelength tracking unit is continuously monitored. This concurrent monitoring can be important as it provides real-time feedback on the system's performance, allowing for immediate adjustments if any discrepancies are detected. This can ensure a dynamic calibration process that can adapt and respond to any deviations in real-time.

Optionally, the calibration process is repeated for a set of the plurality of optical fiber gratings over a range of actuator settings in order to ensure broad wavelength calibration.

Each optical fiber grating in the system may be calibrated at multiple actuator settings. This approach may be not limited to a single grating configuration or a fixed actuator setting; instead, it may encompass a diverse range of configurations and settings. By doing so, the system can accurately calibrate for a wide spectrum of wavelengths and grating conditions. This ensures that the system remains highly accurate and consistent in its performance, irrespective of the range of wavelengths or grating settings it encounters.

Optionally, the system further includes a characterization module for assessing hysteresis, temperature change effects, and/or temporal settling on optical fiber grating behavior, and/or for determining correlation and scaling between multiple optical fiber gratings.

A range of factors that can affect the behavior and efficacy of the optical fiber gratings may be assessed. The hysteresis phenomenon in optical fiber gratings refers to the dependency of the grating's current state on its history, particularly during wavelength tuning. This can lead to inconsistencies in performance if not properly managed. Temperature change effects are also important, as the optical properties of fiber gratings can vary with temperature fluctuations, leading to unwanted shifts in wavelength selectivity. Temporal settling behavior is another factor that this module monitors, which addresses the time-dependent changes in grating properties, ensuring that the system remains stable over extended operational periods.

Additionally or alternatively, in some examples, the correlation and scaling between multiple gratings is assessed. This can be important in a system where several gratings are employed in parallel or series, as their collective behavior can significantly influence the overall system performance. Understanding these relationships ensures that the gratings work in harmony and that their individual adjustments lead to the desired collective output.

By continuously monitoring and characterizing the behavior of the gratings under various conditions, the system can preemptively identify and rectify potential issues before they affect performance. This proactive approach ensures that the system operates reliably over a wide range of conditions.

The calibration process can ensure the high precision and accuracy of the system, for example for applications involving Fiber Bragg Gratings (FBGs). During the calibration process, an absolute wavelength scale may be established. The calibration may start by employing a 3x3 interferometer to track the current wavelength of the tunable source. The fringe count from the interferometer may be continuously monitored to determine the wavelength. In order to establish an absolute wavelength scale, a portion of the light from the narrowband source may be directed through a gas reference cell, known for its very accurately defined absorption lines. The light passing through this cell is then detected. This setup provides a means to correlate the interferometer's fringe count with an absolute wavelength scale, thanks to the known absorption characteristics of the gas cell.

The FBG actuator, in this case, a piezo actuator, may be set to a specific position. The source can then be swept over the relevant wavelength range. During this sweep, the transmission through the FBG can be measured, and the fringe count of the 3x3 interferometer can be monitored. This process may establish an absolute transmission peak for the current actuator setting. The above process may be repeated for each FBG and across the entire range of actuator settings. This approach can ensure that the system is accurately calibrated for each FBG under different operational scenarios.

Following the calibration, the characterization of the system can be taken further by evaluating various factors such as hysteresis, and the effects of temperature changes and temporal settling on the behavior of the FBGs. Additionally, the correlation and scaling between multiple FBGs can be assessed to understand how these factors interplay and influence the system's performance. This level of detailed characterization can be important for ensuring the system's readiness for operation.

Once the calibration and characterization are complete, the system can be prepared for operational use. This preparation ensures that the system can function with the required level of precision and reliability in its intended application, particularly in environments where accurate wavelength control and stability are important.

Optionally, the filter operates based on variable optical path differences, and an actuator unit operatively connected to the optical filter, configured to mechanically adjust the optical path difference within the filter, thereby enabling modification of both the center wavelength and the bandwidth of the filter.

The optical path difference, an important parameter in optical filtering, may refer to the difference in the physical path length that light waves traverse within the filter material. By varying this path length, it becomes possible to selectively control the wavelength of light that the filter allows to pass through. This mechanical adjustment is key to the simultaneous tuning of both the center wavelength and the bandwidth of the filter.

This provides a highly accurate method to alter the filtering characteristics of the system. Furthermore, this mechanism ensures a responsive and dynamic adjustment capability. The mechanical nature of the adjustment allows for quick and accurate modifications to the filter's properties.

Moreover, the mechanical adjustment of the optical path difference facilitates the tuning of both the center wavelength and the bandwidth in a synchronized manner. This synchronization can be important as it ensures that the filter can be accurately calibrated to the specific needs of a given signal or operational environment. It allows for a more integrated approach to filtering, where both the central frequency of the signal and the range of frequencies (bandwidth) that need to be either suppressed or passed can be controlled in tandem. This dual control capability significantly enhances the versatility and effectiveness of the filter, making it suitable for a wide range of applications beyond QKD, such as in optical communication networks, laser systems, and other photonics-based technologies.

Optionally, the actuator unit is operatively connected to the optical filter for mechanically adjusting the filter characteristics.

Optionally, the actuator unit is configured to provide different ranges of mechanical adjustment for modifying both the center wavelength and the bandwidth of the filter.

Optionally, the actuator unit includes a short-stroke actuator mechanism, operating in the nanometer (nm) range, configured for adjusting the center wavelength of the adaptable narrow-band optical filter.

This mechanism allows for accurate tuning of the center wavelength to accommodate specific requirements for filtering time-variant changing noise.

Optionally, the actuator unit further includes a long-stroke actuator mechanism, operating in the micrometer (µm) to millimeter (mm) range, configured for adjusting the bandwidth of the adaptable narrow-band optical filter.

The long-stroke actuation enables broader or narrower filtering capabilities, making the system adaptable to different noise environments and intensities.

Optionally, the actuator unit is capable of simultaneously employing both short-stroke and long-stroke actuation mechanisms. The short-stroke actuator is used for fine-tuning the center wavelength, while the long-stroke actuator adjusts the bandwidth. This dual mechanism provides enhanced control over the filtering characteristics of the system, allowing for dynamic adaptation to varying noise patterns and intensities.

Optionally, the control of the actuator unit for adjusting both the center wavelength and the bandwidth of the optical filter is managed by a processing unit. The processing unit is configured to receive input regarding the characteristics of the time-variant changing noise and to control the actuator unit accordingly, enabling automated adaptation of the filter's properties in real-time.

Optionally, wherein the spectral filter is a free-space Fabry-Perot filter with continuously adaptable bandwidth.

The free-space Fabry-Perot filter with continuously adaptable bandwidth may be configured to perform adjustments to the central wavelength and bandwidth by changing the separation of a Fabry-Perot etalon.

Optionally, the fiber-based spectral filter with continuously adaptable bandwidth comprises: a lower pass filter, a higher pass filter, and means for tuning the center wavelength and adapting the bandwidth by controlling edge positions of both filters.

Optionally, the adaptable narrow-band optical filter comprises a fiber-based spectral filter that includes a high-pass filter and a low-pass filter, each capable of independent adjustment, and wherein the system is configured such that the center wavelength of the optical filter is tunable by synchronously adjusting the edge positions of both the high-pass and low-pass filters, and wherein the bandwidth of the optical filter is adaptable by modifying the edge positions of the high-pass and low-pass filters relative to each other, and wherein the adjustment unit is coupled to both the high-pass and low-pass filters, enabling independent control over each of the high-pass and low-pass filters for the required modifications of the filter's center wavelength and bandwidth.

The optical filter can be fiber-based and embody a spectral filter, which includes both a high-pass and a low-pass filter. Each of these filters can be configured for independent adjustment. This unique configuration allows for the tuning of the center wavelength of the optical filter through the synchronous adjustment of the edge positions of both the high-pass and low-pass filters. Furthermore, the adaptability of the bandwidth of the optical filter is achieved by altering the relative edge positions of the high-pass and low-pass filters. Integral to this system is the adjustment unit, which is coupled to both filters. This coupling enables the adjustment unit with the capability to independently control each filter. Such control is important for the necessary modifications to the filter's center wavelength and bandwidth, thus enabling the system to accurately tailor its filtering properties in accordance with the varying requirements dictated by the signal processing environment.

The spectral filter can be distinctively composed of both a high-pass and a low-pass filter, each configured with the capability for independent adjustment. This dual-filter configuration can introduce a level of control and precision not achievable with standard narrow-band filters.

The dual-filter setup can enable the system to fine-tune the center wavelength of the optical filter. This is accomplished by synchronously adjusting the edge positions of both the high-pass and low-pass filters. By accurately aligning these edge positions, the system can target a specific center wavelength with high accuracy, which can be important in applications where even minor deviations in wavelength can significantly impact performance.

Furthermore, the bandwidth of the optical filter can be made adaptable through the modification of the relative positions of the high-pass and low-pass filters. This allows the system to adapt the width of the wavelength range that the filter allows to pass through. In this way, the filter can be finely adjusted to either broaden or narrow its filtering range, depending on the immediate requirements of the signal and noise characteristics in the environment.

The adjustment unit, which is integrally coupled to both the high-pass and low-pass filters, can be configured to facilitate independent control over each filter, enabling the system to make nuanced adjustments to either the high-pass or low-pass filter without affecting the other. This independence can be important for achieving the accurate modifications required for both the filter's center wavelength and bandwidth.

Advantageously, improved flexibility and precision in the filter's performance can be obtained. By enabling independent control over each component of the spectral filter, the system can perform more refined and targeted adjustments to the filter's characteristics. This level of control is important in environments with highly variable signal characteristics, where the ability to rapidly and independently adjust the filter parameters can be important for maintaining optimal filtering performance.

According to an aspect, the invention provides for a method for filtering a received signal with time-variant amplitude and wavelength and noise, comprising the steps of: providing an adaptable narrow-band optical filter and an adjustment unit coupled to the optical filter for performing adjustments to the filter; monitoring noise characteristics of the time-variant changing noise; change, using the adjustment unit, and based on the monitored noise characteristics, the center wavelength and bandwidth of the optical filter in order to compensate for the time-variant changing noise.

An improved adaptive narrowband optical filter is provided designed for enhancing signal processing by dynamically adjusting to time-variant noise conditions. The filter has both adjustable bandwidth and central wavelength, each capable of being altered independently. Such adaptability offers an optical narrowband filter that can maintain an optimal signal-to-noise ratio under varying noise conditions. The filter achieves this by having an optimal bandpass width that is finely tunable in response to the time-variant background noise levels. It allows for real-time adaptation to changing signal and noise characteristics rather than relying on a static design based on average or worst-case scenarios.

An improved rejection of background light can be achieved by adjusting to the prevailing background conditions, thereby significantly enhancing the clarity and accuracy of the signal being filtered. This can be achieved through a unique combination of an adaptable narrow-band optical filter and an adjustment unit, which work in conjunction to continuously monitor and adapt to the noise characteristics. The adjustment unit can facilitate changes in both the center wavelength and bandwidth of the optical filter, allowing for dedicated or optimal suppression of time-variant noise. This dual capability of adjusting both the bandwidth and central wavelength independently provides a more versatile and effective approach to signal filtering, particularly in environments with highly variable noise characteristics.

A mechanism can be provided for synchronous, in-situ calibration and operation, enabling the filter to adapt and recalibrate in real-time, thereby ensuring continuous optimal performance under changing conditions.

According to an aspect, the invention provides for a method for improving signal-to-noise ratio in a Quantum Key Distribution, QKD, system through adaptive compensation for environmental conditions, the method comprising: providing, within the QKD system, an adaptable narrow-band optical filter system including a plurality of selectable optical fiber gratings associated with different bandwidths, and an actuator unit for adjusting the center wavelength of the optical fiber gratings; monitoring environmental conditions that affect signal transmission within the QKD system; changing at least the bandwidth of the bandpass filter based on the monitored environmental conditions in order to mitigate time-variant changing noise.

The method provides for dynamic responsiveness to environmental changes, which are known to significantly impact the transmission quality in QKD systems. The method enables adaptive and dynamic compensation for time-variant noise fluctuations that are inherent to varying environmental conditions. This adaptive compensation can be important in QKD systems, where even minor fluctuations in noise levels can lead to significant impacts on the system's security and effectiveness. The adaptability is achieved through continuous monitoring of environmental factors that can affect signal transmission, such as atmospheric changes, temperature fluctuations, or electromagnetic interference. This monitoring enables the system to detect and respond to changes in real time.

Upon detecting changes in environmental conditions, at least the bandwidth of the bandpass filter may be adjusted. This adjustment is important for maintaining an optimal signal-to-noise ratio. By altering the bandwidth, the system can effectively filter out noise that falls outside the desired signal range, which can be important in QKD where signal integrity directly relates to security. The ability to also adjust the center wavelength of the filter adds another layer of adaptability, allowing the system to accurately align with the signal frequency, further enhancing signal clarity and reducing noise interference.

This allows for obtaining a QKD system that can maintain high levels of security and reliability even under fluctuating environmental conditions. For instance, in scenarios where atmospheric conditions change rapidly, such as in a mobile QKD setup or during different times of the day, the system can instantly adapt its filtering properties to ensure that the key distribution remains secure and error-free. This real-time adaptability provides for a more robust, flexible, and inherently secure approach.

According to an aspect, the invention provides for a use of the system according to the disclosure for adjusting filter characteristics in order to compensate for changes in the environmental conditions in a free-space Quantum Key Distribution.

It will be appreciated that any of the aspects, features and options described in view of the system apply equally to the methods and the described devices and use. It will also be clear that any one or more of the above aspects, features and options can be combined.

### BRIEF DESCRIPTION OF THE DRAWING

The invention will further be elucidated on the basis of exemplary embodiments which are represented in a drawing. The exemplary embodiments are given by way of non-limitative illustration. It is noted that the figures are only schematic representations of embodiments of the invention that are given by way of non-limiting example.

In the drawing:
Fig. 1 shows a schematic diagram of an embodiment of a system;
Fig. 2 shows a schematic diagram of an embodiment of a system;
Fig. 3 shows a schematic diagram of an embodiment of a system;
Fig. 4 shows a schematic diagram of an embodiment of a system;
Fig. 5 shows a schematic diagram of an embodiment of a system;
Fig. 6 shows a schematic diagram of an embodiment of a system; and
Fig. 7 shows a schematic diagram of an embodiment of a system.

### DETAILED DESCRIPTION

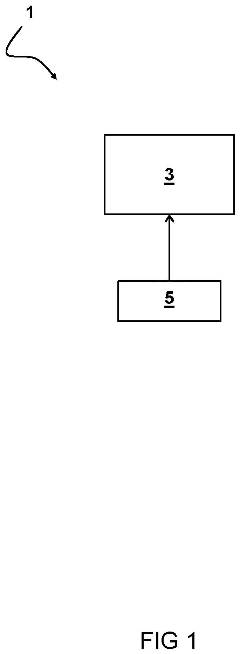

Fig. 1 shows a schematic diagram of an embodiment of a system 1 configured to filter a received signal with time-variant amplitude and wavelength and noise characteristics, wherein the system 1 includes an adaptable narrow-band optical filter 3 that is configured to have an adjustable center wavelength and an adjustable bandwidth in order to compensate for time-variant changing signal and noise, and wherein the system 1 includes an adjustment unit 5 coupled to the optical filter 3 for performing adjustments to the filter in order to modify its filtering properties as required by time-variant characteristics of the signal and noise.

In some examples, a fiber-based spectral filter system is employed that has a continuously adaptable bandwidth. The system may effectively have (at least) two filters, namely one high-pass and one low-pass. By carefully controlling the edge positions of both filters, the center wavelength can be tuned, i.e. move both edges in unison, and the bandwidth can be adapted, i.e. both edges move relative to each other. To realize this both constituent filters may be changed independently. This may require a duplication of the calibration and in-situ monitoring controls.

Alternatively, in some examples, a free space Fabry-Perot system is employed with continuously adaptable bandwidth. Such arrangement may rely on the fact that when making small adjustments to the separation of a Fabry-Perot etalon the central wavelength changes, and the bandwidth changes minimally, yet for large adjustment of the separation a significant change in bandwidth is observed. For example, prior to a satellite overpass the bandwidth would be set using the long stroke, and during the overpass only short-stroke would be used to change the center wavelength. Although the bandwidth can be tuned continuously (i.e. it can reach any value), contrary to a "fiber-based spectral filter, continuously adaptable bandwidth" arrangement, this may not be done independent of control over the central wavelength. For calibration, it may benefit from the (predictable) periodicity of the etalon, and use a different spectral peak for in-situ monitoring and control.

Alternatively, in some examples, a fiber-based filter may be provided for achieving adjustable bandwidth and passband. This allows for accurate control over the filtering process, enabling the filter to adapt to various signal and noise conditions effectively. In some examples, multiple fiber bragg gratings (FBGs) are used. An array of FBGs may be arranged in parallel, with each grating possessing a distinct bandwidth. This arrangement allows for a diverse range of bandwidth options within a single filter system.

In some examples, mechanical tuning can be utilized for the passband adjustment. This tuning can be accomplished through a single-stage mechanism, which simplifies the operational complexity while ensuring accurate and rapid adjustments of the passband. This can be done using a (electro-)mechanical component, such as a piezoelectric device, that may be integrated for simultaneous adjustment of all the FBGs. This mechanism primarily alters the central wavelength or passband of the filter, enabling real-time adaptability to changing signal requirements.

In some examples, an optical switch is integrated into the system to control the bandwidth. The optical switch can be configured to select between the multiple FBGs, enabling adjusting the filter's bandwidth. This offers the flexibility to adequately choose the appropriate bandwidth for varying operational scenarios. This optical switch enables quick and efficient changes to the bandwidth. The use of an optical switch for this purpose underscores the invention's emphasis on speed and precision in response to changing conditions.

In some examples, an in-operation metrology system that is configured for calibration is arranged, enabling the filter to maintain high accuracy and performance standards in real-time. The metrology system can be used to ensure that the filter is always operating at its optimal settings, regardless of external variations.

In some examples, a calibration system is arranged on-board, employing a gas cell. This system provides a reference standard for calibration, ensuring that the filter maintains its accuracy over time and use. The gas cell offers a stable and reliable calibration standard, which is important for the long-term consistency and dependability of the filter's performance.

The system can be used in a quantum key distribution (QKD) setting. The development of a tunable narrowband filter that is versatile in both its central wavelength and bandwidth adjustability is of great importance in optimizing the signal-to-noise ratio in QKD applications, especially considering the dynamic nature of background noise levels. By continuously adjusting the tunable narrowband filter in response to atmospheric changes, it the signal-to-noise ratio can be improved and optimal communication integrity in QKD can be maintained, which is sensitive to environmental fluctuations.

In some examples, the FBGs are arranged to provide the same central wavelength at a specific actuator (e.g. piezo) setting. In this way, it can be ensured that while switching between different bandwidths, the filter maintains a consistent central wavelength. This can be important for some applications such as for example for maintaining signal integrity in QKD applications.

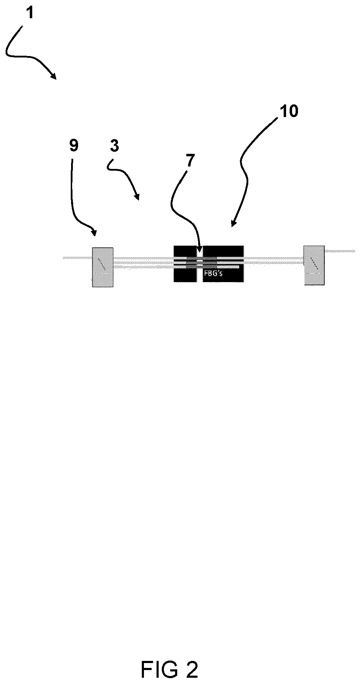

Fig. 2 shows a schematic diagram of an embodiment of a system 1. In this exemplary embodiment, the filter 3 comprises a plurality of optical fiber gratings 7 associated with different bandwidths. Furthermore, the filter 3 comprises an actuator unit 10 for adjusting the center wavelength of the optical fiber gratings 7. In this example, the actuator unit 10 is configured to mechanically strain the optical fiber gratings 7, thereby adjusting the central wavelength of the filter 3. The plurality of optical fiber gratings 7 may be configured to be collectively adjusted in central wavelength by means of the actuator unit 10.

The filter may be a fiber-based spectral filter with switchable bandwidth.

In this example, the plurality of optical fiber gratings 7 are arranged in parallel, each corresponding to a different bandwidth.

Different types of actuator units 10 may be employed. In this example, the actuator unit 10 is a piezoelectric stage for applying strain to the optical fiber gratings 7 in order to set the center wavelength of the optical fiber gratings 7.

In the shown example, the system comprises an optical switch 9 for switching between the plurality of optical fiber gratings 7 in order to select the bandwidth of the filter 3.

Advantageously, the system can enable simultaneous adjustment of multiple FBGs in central wavelength. The optical switch can be used for bandwidth adjustments. This dual adjustability provides for a tunable bandpass filter that can continuously adapt to environmental changes for signal-to-noise optimization.

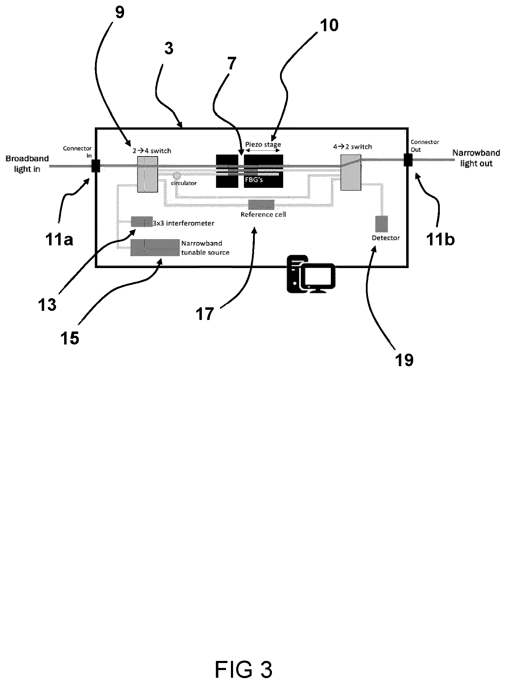

Fig. 3 shows a schematic diagram of an embodiment of a system 1. In this example, the system is provided with optionally a connector in 11a and optionally a connector out 11b. Broadband light may enter the system via the connector in 11a. Narrowband light may exit from the connector out 11b. The switch 9 selects FBG (i.e. bandwidth), and the piezo stage 10 sets center wavelength.

It will be appreciated that the input and output do not necessarily have a connector. The fiber may be spliced, or the interface may even be in free space. Various alternative arrangements are possible.

In the shown example, the system 1 further is provided with the following optional unit: a 3x3 interferometer 13, a narrowband tunable source 15, a reference cell 17, and a detector 19.

The system can be operated in different modes, namely a calibration mode and an operations mode.

The calibration mode of the system can be designed to ensure high accuracy and reliability in wavelength measurements. This mode involves a series of steps to calibrate the system's exemplary 3x3 interferometer (IF) signal against a scan between two known wavelengths.

The first step involves coupling an internal metrology source to the Fiber Bragg Grating (FBG) of interest, which then connects to an internal detector. This setup is important for establishing a baseline reading and understanding how the FBG responds to known wavelengths from the metrology source.

Then, a step-and-measure scan can be carried out through several wavelengths, for example in preparation for the next satellite overpass in QKD applications. This may involve sequentially positioning the metrology source to different target wavelengths. This step can be important for mapping out the FBG's response across a spectrum of wavelengths. Once the source is set to a target wavelength, the piezo's voltage can be fine-tuned to achieve maximum light transmission through the FBG. This step allows identification of the optimal settings for each wavelength. Then, the readings from for example a capacitive (cap) sensor may be recorded. This sensor may be use for detecting the position or movement of the component used for wavelength tuning.

The system may be configured to shift from calibration to actual usage, i.e. operations mode involving real-time adjustments and monitoring to ensure optimal performance. The input (connector in) may be connected to the FBG of interest and then connecting the output (connector out). The selected FBG can be integrated into the operational path of the system. The system may control the piezo to adjust the wavelength based on the feedback from the capacitive sensor, which is calibrated to convert its readings to wavelength values. In this way, it can be ensured that the FBG operates at the correct wavelength in real-time.

In some examples, a temperature sensor can be used for further corrections. Temperature fluctuations can affect the performance of optical components, so this sensor can provide critical data for maintaining system accuracy.

In some examples, different FBGs may be cross-referenced, with the capability for simultaneous latching. The system may be configured to compare and adjust multiple FBGs in real-time.

Therefore, the calibration mode may be used to ensure that the system is accurately tuned for accurate wavelength measurements, while the operations mode may be employed for real-time adjustments and monitoring for optimal performance during actual use.

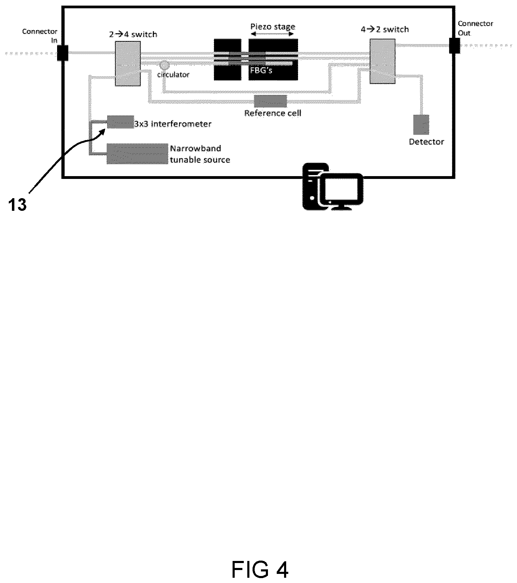

As illustrated in fig. 4, the system 1 can be configured to perform wavelength tracking. The operation of this interferometer 13 is based on the principle that when there is a change in the wavelength of the light passing through it, the interference pattern, commonly referred to as 'fringes', observed in these three arms undergoes a corresponding alteration. With other words, when wavelength changes the fringes in the 3 arms of the interferometer 13 change.

The system 1 is equipped with highly sensitive detectors that read these variations in the fringe patterns with high precision. These detectors can play an important role in enabling the system 1 to ascertain, instantaneously and with high accuracy, the current position within the fringe pattern. This capability is important for real-time monitoring and adjustments, especially in applications where accurate wavelength tracking is imperative.

The system can accurately detect and quantify shifts or deviations from a given wavelength.

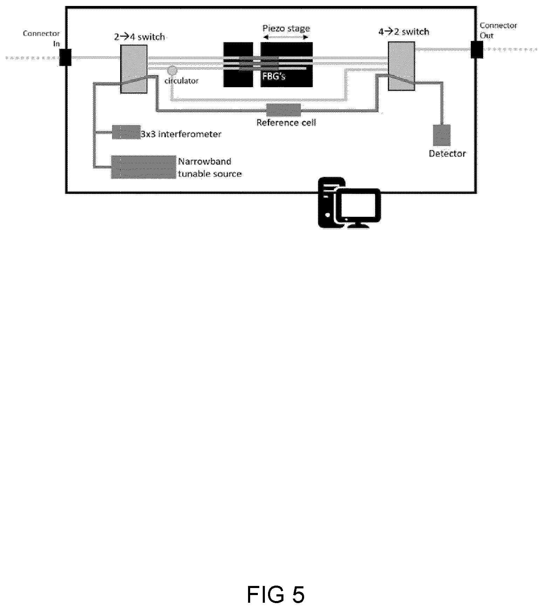

In fig. 5, the wavelength calibration is illustrated. The system 1 may establish an absolute wavelength scale by scanning the laser wavelength and recording the fringe counts corresponding to specific points where absorption dips occur. The absorption dips may serve as definitive markers on the wavelength scale, thereby allowing for the establishment of an absolute reference for the wavelength measurements.

The issue of Optical Path Difference (OPD) drift can be addressed in the interferometer 13. The interferometer 13 is sensitive to ambient variations, particularly temperature fluctuations. These environmental changes can cause slight alterations in the arm-lengths of the interferometer, leading to OPD drift. This drift, if uncorrected, could potentially compromise the accuracy of the wavelength measurements. However, the system is configured to effectively mitigate this challenge through a significant correlation observed between two specific absorption lines. This correlation ensures that, despite the ambient-induced arm-length changes, the fringe counts remain a reliable measure for detecting accurate wavelength changes. The fringe counts, therefore, continue to serve as a robust tool for tracking relative wavelength variations with high precision.

In order to maintain accuracy in the absolute wavelength scale, the system may require occasional or periodic recalibration. The recalibration process may be designed to counteract the effects of OPD drift. For example, the system 1 may be configured to undergo recalibration every predetermined period of time. In some examples, this predetermined period of time is around 5 minutes, a frequency that has been optimized to ensure that the drift-induced error in the absolute wavelength measurement is maintained at less than 0.3 picometers (pm). This frequent recalibration routine can ensure the system's reliability and accuracy, making it highly suitable for applications where accurate and accurate wavelength measurements are important.

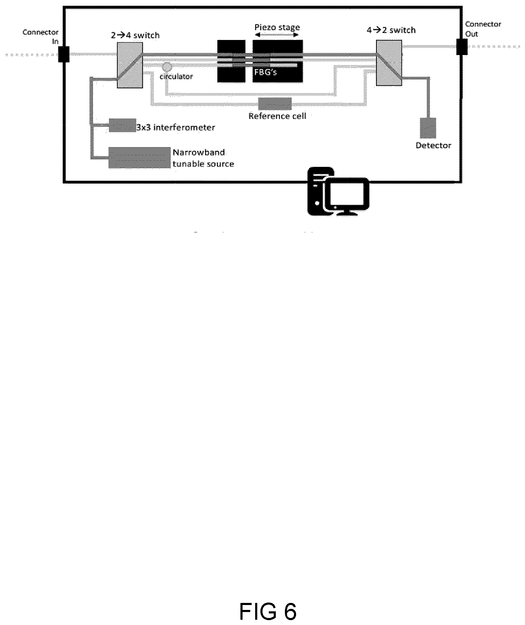

In fig. 6, FBG characterization is illustrated. An initial step may involve the accurate positioning of a piezoelectric (piezo) stage. The piezo stage can facilitate fine mechanical adjustments. The accurate positioning of the piezo stage can be utilized to adjust the tension or spacing within the FBG and/or a related optical component. This adjustment is important as it can alter the characteristics of the light that the FBG reflects and transmits, thereby enabling fine-tuning of the FBG's optical properties. The next step may involve sweeping the laser's wavelength across a specific range while simultaneously monitoring the interferometer 13. This process enables the system to identify how the FBG responds to different wavelengths. The interferometer is used to track the wavelength that is input to an FBG.

Another step may involve measuring how the FBG transmits light across different wavelengths. Unlike relative measurements, absolute measurement, determining the exact transmission characteristics of the FBG for each wavelength, may be determined. This data may be important for understanding the FBG's performance and efficiency across the swept wavelength range. It allows for the characterization of the FBG's filtering properties, such as its bandwidth and the shape of its transmission and reflection spectra.

A further step may involve determining the FBG's center wavelength, which is the wavelength at which the FBG has its peak reflection or transmission efficiency. This can be achieved by analyzing the data obtained from the previous steps. The center wavelength is a defining characteristic of the FBG and can be important for its application in filtering specific wavelengths. Accurate determination of this parameter can ensure that the FBG can be effectively used in accurate optical filtering applications, such as in laser systems, optical sensors, and communication networks.

Each of these steps, when executed with precision, can contribute to a comprehensive understanding and effective utilization of the FBG's properties, enabling its optimal application in various high-precision optical systems.

In some examples, a repetitive, systematic process may be applied to multiple Fiber Bragg Gratings (FBGs). This can be important for characterizing and calibrating each FBG in a system, particularly in settings where accurate wavelength filtering is important.

The previously described process (setting the piezo stage position, sweeping the laser while tracking the interferometer, measuring the absolute wavelength-dependent transmission, and determining the center wavelength) may be repeated for different FBGs. Each FBG may have unique characteristics, such as varying center wavelengths, bandwidths, or reflection/transmission profiles. By repeating the process for each FBG, it is possible to comprehensively map the specific properties and performance metrics of individual gratings. This step can be important for ensuring that each FBG is functioning correctly and is suitable for its intended application.

After completing the measurements and characterizations for one stage position (cf. actuator setting), the system moves to the next stage position. For example, this may involve mechanical or automated adjustments using the piezo stage to either alter the configuration of the current FBG or to position a new FBG for testing. This step can be important for systematic testing and ensures that each FBG is aligned correctly for accurate measurement.

The repeating can ensure accuracy. Repeating the process helps in verifying the consistency and reliability of the measurements. Multiple iterations provide a more substantial data set, allowing for more accurate statistical analysis and quality control. Repetitive testing can be important for calibrating each FBG under various conditions, ensuring they perform as expected in their specific application environments.

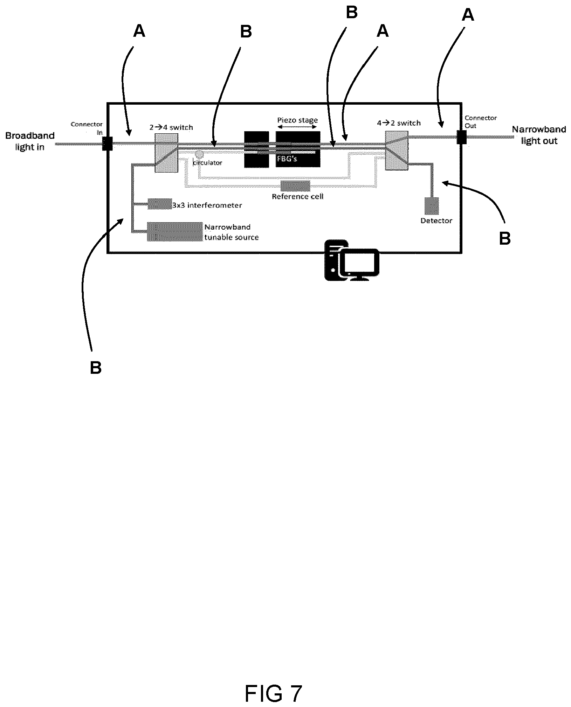

Fig. 7 illustrates FBG-referenced operation mode. The operation mode may for instance be used to enhance the efficiency and/or accuracy of spectral filtering in quantum key distribution (QKD) applications.

FBGs may exhibit significant drift, influenced by at least one of thermal or temporal factors. This drift may be a significant concern in applications requiring extremely high accuracy, such as advanced optical communication systems. FBGs which are mounted onto the same actuator stage and share a common thermal housing may exhibit a high degree of correlation in their drift behaviors. This means that the way one FBG drifts in response to environmental factors may be closely mirrored by other FBGs in the same setup. Recognizing and leveraging this correlation is important to the system's accuracy.

The system advantageously uses this correlation. An inactive FBG (i.e., one with a different bandwidth than the one currently in use, represented by path B in the figure) is employed to reference the currently active FBG (represented by path A). This methodology allows for a comparative analysis between the active and inactive FBGs.

By utilizing a calibrated narrowband source and measuring the transmission through the inactive FBG, any deviations from its last known calibrated state can be accurately characterized. This characterization is crucial as it provides a benchmark against which the active FBG's current state can be compared. Based on this comparison, corrections can be applied to the currently active FBG to counteract any drift that has occurred since its last calibration. This process ensures that the active FBG maintains its precision and accuracy over time.

In order to facilitate this mode of operation, the optical switch in the system may need to have the capability to latch to two outputs simultaneously. This feature allows the system to maintain a connection to both the active and the inactive FBG concurrently, which can be important for real-time monitoring and correction.

Therefore, this approach of using correlated FBGs within the same thermal and mechanical setup for mutual referencing and correction provides for an advantageous strategy. It can effectively mitigate the impact of drift in FBGs, thereby maintaining the high level of accuracy required in sensitive optical applications. This methodology enhances the reliability of the filter system.

The FBG-referenced operation mode may thus integrate two distinct yet complementary paths - the spectral filtering (path A) and the drift-correction (path B). Both paths A,B leverage the unique properties of Fiber Bragg Gratings (FBGs) to achieve high precision and reliability in filtering QKD light.

The spectral filtering of QKD light (path A) involves the use of an active spectral filter, which is important for the selective transmission and filtering of QKD light. The process begins with scanning the piezo stage to accurately move this active spectral filter to align with the currently requested wavelength trajectory. This step is important in QKD, where exact wavelength matching is necessary for secure and efficient transmission of quantum keys. The ability to dynamically adjust the spectral filter to different wavelengths allows the system to adapt to various QKD scenarios, ensuring the filter's relevance across a wide range of operational conditions.

In the drift-correction (path B) phase, the system focuses on maintaining the accuracy and stability of the spectral filter over time. This is achieved by continuously monitoring any wavelength mismatch with a currently inactive FBG. FBGs are known for their high wavelength specificity, making them excellent references for detecting even minute drifts in the spectral filter's wavelength. If a mismatch is detected, the system can automatically correct the piezo setpoint to realign the filter with the desired wavelength. This feedback loop can be important for counteracting the effects of environmental factors, such as temperature fluctuations, that could cause drift in the spectral filter's performance.

The integration of these two paths A, B can result in a wavelength-tuneable, bandwidth-selectable, ultra-narrow-band spectral filter capable of sub-picometer absolute wavelength accuracy. Such precision can be important in QKD systems, where the integrity and security of the quantum keys may heavily depend on the exact matching of wavelengths between the transmitting and receiving ends. By providing a filter that can adapt in real-time to the required wavelengths while maintaining a high degree of accuracy, this FBG-referenced operation mode significantly enhances the reliability and effectiveness of QKD systems. This mode not only ensures optimal spectral filtering in the face of varying operational demands but also safeguards against potential wavelength drifts, thereby upholding the stringent precision standards essential in quantum communications.

Advantageously, the system of the disclosure enables a wavelength-tuneable, bandwidth-selectable, ultra-narrow-band spectral filter capable of sub-picometer absolute wavelength accuracy. The ability to tune the wavelength and select bandwidth with such fine accuracy has broad implications for various high-precision optical applications.

For example, the filter's capabilities are especially advantageous for daytime QKD. Quantum key distribution during daytime faces additional challenges due to higher levels of background light and noise. The ultra-narrow bandwidth and accurate wavelength tuning of this filter effectively mitigate these issues, making it a potent tool for enhancing the security and reliability of QKD under daylight conditions.

The FBG-referenced operation mode can be important, especially for achieving the ultra-narrow filter bandwidths required in sensitive applications like QKD. The use of FBGs as reference points can ensure that the filter maintains its wavelength accuracy over time, countering potential drifts and environmental effects.

The integration of a 3x3 interferometer with a gas reference cell can be seen as an advantageous approach to achieving cost-effective, fiber-based sub-picometer absolute wavelength accuracy. This combination leverages the stability and precision of interferometric methods with the well-defined absorption lines of a gas reference cell, creating a robust system for accurate wavelength determination and calibration.

In some examples, temporal and dynamic characterization can be incorporated into the real-time operation control loop. Understanding and correlating these dynamic aspects can be important for the system to adapt and respond effectively to real-time changes. This consideration can ensure that the spectral filter remains accurate and reliable under varying operational conditions, which can be important for applications that require high levels of precision and stability.

It will be appreciated that the filter can be used in various fields. The filter can be used in signal processing applications. However, the filter can also be used in fields such as quantum technology and quantum entanglement. In quantum technology, for instance, the precision control offered by this filter is invaluable for experiments and applications involving quantum bits (qubits). The ability to finely adjust the bandwidth and passband allows for meticulous handling of quantum bit 'information', which is essential for quantum computing and quantum communication.

In the realm of quantum entanglement, this filter's accurate control over a single wavelength and single polarization alignment plays an important role. Entangled photons, fundamental in quantum information and communication systems, require stringent control of properties like wavelength and polarization. The filter's capability to adjust these parameters with high accuracy ensures that it can be effectively used in creating and manipulating entangled photon pairs, essential for quantum teleportation, superdense coding, quantum cryptography, etc.

It will be appreciated that the filter's versatility makes it suitable for a range of other advanced applications. Moreover, the filter's exemplary fast calibration and absolute calibration system make it ideal for applications requiring rapid and reliable adjustments, such as in optical communication systems where alignment and tuning to specific wavelengths and polarizations are crucial for maintaining high data transmission rates and reducing interference.

It will be appreciated that a central wavelength (often referred to as the center wavelength or peak wavelength) of a filter may refer to the wavelength at which the filter transmits the maximum amount of light. It can represent the midpoint of the passband in the filter.

For optical filters, the passband is the range of wavelengths where light is transmitted (rather than being blocked or attenuated). The width of this passband can vary greatly depending on the type of filter.

It will be appreciated that narrowband filters may transmit a very specific range of wavelengths, such as for example a 10 nm window centered around 532 nm.

It will be appreciated that Fiber Bragg Gratings (FBGs) are a type of distributed Bragg reflector constructed in a short segment of optical fiber that reflects particular wavelengths of light and transmits all others.

It will be appreciated that an optical switch may refer to a device that enables the routing of optical signals between different channels or paths. For instance, in the context of Fiber Bragg Gratings (FBGs), an optical switch can be used to switch between multiple FBGs, essentially selecting which FBG's reflection or transmission is to be monitored or used in a given application. Various optical switch types exist, such as for instance mechanical optical switches, thermo-optic optical switches, electro-optic optic switches, acousto-optic switches, magneto-optic switches, liquid crystal optical switches, micro-electromechanical systems (MEMS) optical switches, etc. The choice of which type of optical switch to use may depend on various factors like the required switching speed, insertion loss, the number of FBGs to be switched between, cost considerations, and other specific requirements of the filter system.

It will be appreciated that in the context of FBGs, bandwidth may refer to the range of wavelengths over which the FBG operates (i.e., reflects or attenuates the light). An FBG with a narrow bandwidth would reflect a narrow range of wavelengths, while one with a wider bandwidth would reflect a broader range.

It will be appreciated that the central reflection wavelength of an FBG can be influenced by the periodicity or spacing of its grating. When mechanical strain is applied to an FBG, either stretching or compressing it, the periodicity changes, and consequently, the Bragg wavelength shifts.

Some embodiments may be implemented, for example, using a machine or tangible computer-readable medium or article which may store an instruction or a set of instructions that, if executed by a machine, may cause the machine to perform a method and/or operations in accordance with the embodiments.

Various embodiments may be implemented using hardware elements, software elements, or a combination of both. Examples of hardware elements may include processors, microprocessors, circuits, application specific integrated circuits (ASIC), programmable logic devices (PLD), digital signal processors (DSP), field programmable gate array (FPGA), logic gates, registers, semiconductor device, microchips, chip sets, et cetera. Examples of software may include software components, programs, applications, computer programs, application programs, system programs, machine programs, operating system software, mobile apps, middleware, firmware, software modules, routines, subroutines, functions, computer implemented methods, procedures, software interfaces, application program interfaces (API), methods, instruction sets, computing code, computer code, et cetera.

Herein, the invention is described with reference to specific examples of embodiments of the invention. It will, however, be evident that various modifications, variations, alternatives and changes may be made therein, without departing from the essence of the invention. For the purpose of clarity and a concise description features are described herein as part of the same or separate embodiments, however, alternative embodiments having combinations of all or some of the features described in these separate embodiments are also envisaged and understood to fall within the framework of the invention as outlined by the claims. The specifications, figures and examples are, accordingly, to be regarded in an illustrative sense rather than in a restrictive sense. The invention is intended to embrace all alternatives, modifications and variations which fall within the scope of the appended claims. Further, many of the elements that are described are functional entities that may be implemented as discrete or distributed components or in conjunction with other components, in any suitable combination and location.

In the claims, any reference signs placed between parentheses shall not be construed as limiting the claim. The word 'comprising' does not exclude the presence of other features or steps than those listed in a claim. Furthermore, the words 'a' and 'an' shall not be construed as limited to 'only one', but instead are used to mean `at least one', and do not exclude a plurality. The term "and/or" includes any and all combinations of one or more of the associated listed items. The mere fact that certain measures are recited in mutually different claims does not indicate that a combination of these measures cannot be used to an advantage.

## Claims

1. A system configured to filter a received signal with time-variant amplitude and wavelength and noise characteristics, wherein the system includes an adaptable narrow-band optical filter that is configured to have an adjustable center wavelength and an adjustable bandwidth in order to compensate for time-variant signal and noise, and wherein the system includes an adjustment unit coupled to the optical filter for performing adjustments to the filter in order to modify its filtering properties as required by time-variant characteristics of the signal and noise.

2. The system of claim 1, wherein the filter comprises a plurality of optical fiber gratings associated with different bandwidths.

3. The system of claim 1 or 2, wherein the filter comprises an actuator unit for adjusting the center wavelength of the optical fiber gratings.

4. The system of claim 1, 2 or 3, wherein the filter is a fiber-based spectral filter with switchable bandwidth.

5. The system of claim 3 or 4, wherein the actuator unit is configured to mechanically strain the optical fiber gratings, thereby adjusting the central wavelength of the filter.

6. The system of any one of the preceding claims 3-5, wherein the plurality of optical fiber gratings are configured to be collectively adjusted in central wavelength by means of the actuator unit.

7. The system of any one of the preceding claims 2-6, wherein the plurality of optical fiber gratings are arranged in parallel, each corresponding to a different bandwidth.

8. The system of any one of the preceding claims 3-7, wherein the actuator unit is a piezoelectric stage for applying strain to the optical fiber gratings in order to set the center wavelength of the optical fiber gratings.

9. The system of any one of the preceding claims 2-8, further comprising an optical switch for switching between the plurality of optical fiber gratings in order to select the bandwidth of the filter.

10. The system of any one of the preceding claims 2-9, further comprising a calibration mechanism configured to use a secondary, currently inactive optical fiber grating for referencing a currently active optical fiber grating to characterize and correct deviations due to drift, wherein the secondary optical fiber grating shares a thermal housing with the active optical fiber grating, and wherein the calibration mechanism further includes a feedback mechanism configured to adjust the active optical fiber grating based on the drift characteristics observed in the inactive optical fiber grating,
wherein the calibration mechanism utilizes a narrowband source and measures transmission through the inactive optical fiber grating to detect deviations from a last calibration state of the active optical fiber grating, and/or,
wherein the optical switch is configured to latch to two outputs simultaneously, enabling concurrent connection to both an active and an inactive optical fiber grating for real-time calibration and/or correction purposes.

11. The system of any one of the preceding claims, wherein a calibration module including an wavelength tracking unit is arranged for tracking the wavelength of a tunable optical source, wherein the calibration module includes a gas reference cell with known absorption lines to establish an absolute wavelength scale for the tunable optical source by comparing the detected light through the gas cell with output from the wavelength tracking unit.

12. The system of claim 11, wherein the calibration module is configured to sweep the tunable optical source over a relevant wavelength range and measure the transmission through each optical fiber grating while monitoring the output from the wavelength tracking unit, thereby establishing an absolute transmission peak for each actuator setting.

13. The system of claim 1, wherein the filter operates based on variable optical path differences, and an actuator unit operatively connected to the optical filter, configured to mechanically adjust the optical path difference within the filter, thereby enabling modification of both the center wavelength and the bandwidth of the filter.

14. The system of claim 1, wherein the adaptable narrow-band optical filter comprises a fiber-based spectral filter that includes a high-pass filter and a low-pass filter, each capable of independent adjustment, and wherein the system is configured such that the center wavelength of the optical filter is tunable by synchronously adjusting the edge positions of both the high-pass and low-pass filters, and wherein the bandwidth of the optical filter is adaptable by modifying the edge positions of the high-pass and low-pass filters relative to each other, and wherein the adjustment unit is coupled to both the high-pass and low-pass filters, enabling independent control over each of the high-pass and low-pass filters for the required modifications of the filter's center wavelength and bandwidth.

15. A method for filtering a received signal with time-variant amplitude and wavelength and noise, comprising the steps of:
providing an adaptable narrow-band optical filter and an adjustment unit coupled to the optical filter for performing adjustments to the filter;
monitoring noise characteristics of the time-variant noise;
change, using the adjustment unit, and based on the monitored noise characteristics, the center wavelength and bandwidth of the optical filter in order to compensate for the time-variant noise.
